# EUROPÄISCHE PATENTSCHRIFT

(11) **EP 2 707 256 B1**
(45) Veröffentlichungstag und Bekanntmachung des Hinweises auf die Patenterteilung: **21.06.2017**
(21) Anmeldenummer: 12719628.5
(22) Anmeldetag: 26.04.2012
(51) Int. Cl.: B60R 21/18, B60R 22/12

(54) **AUFBLASBARER SICHERHEITSGURT MIT DARAN BEFESTIGTEM GURTKNOPF**
INFLATABLE SEAT BELT WITH SEAT BELT BUTTON FIXED THEREON
CEINTURE DE SÉCURITÉ GONFLABLE PRÉSENTANT UN BOUTON DE CEINTURE FIXÉ À CELLE-CI

(30) Priorität: 07.05.2011 DE 102011100824
(43) Veröffentlichungstag der Anmeldung: 19.03.2014
(73) Patentinhaber: Autoliv Development AB, 447 83 Vårgårda (SE)
(72) Erfinder: STORCH, Jan, 65232 Taunusstein (DE); BLANK, Joakim, 22455 Hamburg (DE)
(74) Vertreter: Müller, Karl-Ernst
(86) Internationale Anmeldenummer: PCT/EP2012/057590
(87) Internationale Veröffentlichungsnummer: WO 2012/152590

(56) Entgegenhaltungen:
- DE-B4-102005 058 343
- DE-U1- 20 004 363

## Beschreibung

Die Erfindung betrifft einen aufblasbaren Sicherheitsgurt mit wenigstens zwei übereinander angeordneten Gurtbandlagen und einer bei Aktivierung einen zwischen die Gurtbandlagen einleitbaren Gasstrom erzeugenden Druckgasquelle und mit einem an einer der Gurtbandlagen festgelegten Gurtknopf, wobei der Gurtknopf wenigstens zweiteilig mit jeweils einen an unterschiedlichen Seiten der Gurtbandlage angeordneten und die Gurtbandlage einklemmenden ersten und zweiten Klemmteil ausgebildet ist und an dem zwischen den Gurtbandlagen angeordneten ersten Klemmteil wenigstens ein die Gurtbandlage durchstoßender Verbindungsstift festgelegt ist.

Ein aufblasbarer Sicherheitsgurt mit den vorgenannten, gattungsgemäßen Merkmalen ist aus der DE 200 04 363 U1 bekannt. Der aufblasbare Sicherheitsgurt besteht aus einem inneren aufblasbaren Schlauch und aus einem diesen außen umschließenden Maschengurtband. Im nicht-aufgeblasenen Zustand ist das Maschengurtband durch eine in einer zugeordneten Gurtzunge angeordnete Durchführung hindurchgeführt und in der Durchführung durch einen an der Gurtzunge vorgesehenen Gurtknopf festgelegt. Der Gurtknopf besteht aus zwei Gurtknopfhälften, wobei die erste Hälfte einen Verbindungsstift und die zweite Hälfte ein Loch zur Aufnahme des Verbindungsstiftes aufweist. Hierbei ist vorgesehen, dass im Falle des Aufblasens des inneren aufblasbaren Schlauches durch die dadurch einwirkende Zugkraft eine Trennung der beiden Gurtknopfhälften herbeigeführt wird und somit ein freier Durchlauf des aufblasbaren Sicherheitsgurtes durch die Durchführung der Gurtzunge ermöglicht ist.

Ein anderer aufblasbarer Sicherheitsgurt ist aus der DE 10 2005 058 343 B4 bekannt. Soweit auch an einem derartigen aufblasbaren Sicherheitsgurt ein den Bewegungsweg einer an dem aufblasbaren Sicherheitsgurt verschiebbar angeordneten Gurtzunge begrenzender Gurtknopf anzuordnen ist, ist bei dem bekannten aufblasbaren Sicherheitsgut der Gurtknopf dauerhaft bzw. unlösbar auf der Außenseite einer der beiden Gurtbandlagen kraftschlüssig oder stoffschlüssig befestigt, beispielsweise aufgeklebt oder aufgeschweißt. Mit einer derartigen Befestigung des Gurtknopfes an einem aufblasbaren Sicherheitsgurt ist noch der Nachteil verbunden, dass sich beim Aufblasen des Sicherheitsgurtes zu einer Schlauchform die beiden im Ursprungszustand ebenen Gurtbandlagen derartig in eine gekrümmte Form verformen, dass eine ebene Anlage der Auflagefläche des Gurtknopfes auf der Gurtbandlage nicht mehr gewährleistet ist, so dass in Folge dessen das Risiko besteht, dass sich der Gurtknopf von der ihn tragenden Gurtbandlage löst.

Der Erfindung liegt daher die Aufgabe zugrunde, die Befestigung eines Gurtknopfes an einem aufblasbaren Sicherheitsgurt mit den gattungsgemäßen Merkmalen so einzurichten, dass ein Ablösen des Gurtknopfes von dem aufblasbaren Sicherheitsgurt bei dessen Aufblasen verhindert ist.

Die Lösung dieser Aufgabe ergibt sich einschließlich vorteilhafter Ausgestaltungen und Weiterbildungen der Erfindung aus dem Inhalt der Patentansprüche, welcher dieser Beschreibung nachgestellt sind.

Die Erfindung sieht in ihrem Grundgedanken vor, dass der Verbindungsstift aus Metall besteht und mit einem an seinem äußeren Umfang ausgebildeten Sägezahnprofil in eine an dem zweiten Klemmteil ausgebildete, einen kleineren Durchmesser als der Außendurchmesser des Sägezahnprofils aufweisende Ausnehmung eingreift und darin festgelegt ist.

Mit der Erfindung ist der Vorteil verbunden, dass mittels des in die Ausnehmung des zweiten Klemmteils eingreifenden Sägezahnprofils des aus Metall bestehenden Verbindungsstiftes in Verbindung mit der eingestellten Presspassung so hohe Trennkräfte der Verbindung der beiden Klemmteile miteinander erzeugt sind, dass ein selbsttätiges Lösen der Verbindung auch unter den durch das Aufblasen auf die Klemmteile ausgeübten Kräften weitgehend ausgeschlossen ist. In vorteilhafter Weise werden nur wenige Einzelteile für die Befestigung des Gurtknopfes an der Gurtbandlage benötigt und auch der Montageprozess ist einfach und ohne großen apparativen Aufwand durchzuführen, da das Einpressen des Verbindungsstiftes in die am zweiten Klemmteil ausgebildete Ausnehmung beispielsweise mittels einer Handpresse erfolgen kann. Soweit der Verbindungsstift aus Metall, vorzugsweise aus Stahl oder aus einem Leichtmetall, wie insbesondere Aluminium besteht, kann der Verbindungsstift durch ein Fliespressverfahren hergestellt sein.

Nach einem Ausführungsbeispiel der Erfindung ist vorgesehen, dass der Verbindungsstift fester Bestandteil des ersten Klemmteils ist. Beispielsweise kann der Verbindungsstift in ein aus Kunststoff bestehendes erstes Klemmteil eingespritzt sein.

Alternativ kann vorgesehen sein, dass der Verbindungsstift als gesondertes Bauteil an dem ersten Klemmteil befestigt ist, beispielsweise im Rahmen einer Schraubverbindung.

Soweit im Rahmen der Presspassung die äußeren Enden des Sägezahnprofils in die die Ausnehmung umgrenzenden Wandungen des zweiten Klemmteils eingreifen können, kann nach einem Ausführungsbeispiel der Erfindung vorgesehen sein, dass die in dem zweiten Klemmteil ausgebildete Ausnehmung zur Aufnahme des Verbindungsstiftes von einer in dem zweiten Klemmteil festgelegten Hülse gebildet ist.

Hierbei kann vorgesehen sein, dass die Hülse wiederum fester Bestandteil des zweiten Klemmteils, also etwa in ein aus Kunststoff bestehendes zweites Klemmteil eingespritzt ist. Alternativ kann vorgesehen sein, dass die Hülse in geeigneter Weise an dem zweiten Klemmteil befestigt ist.

In Entsprechung zur Ausbildung des Verbindungsstiftes kann vorgesehen sein, dass die Hülse aus Metall, vorzugsweise aus einem Leichtmetall wie insbesondere Aluminium besteht.

Soweit nach einem Ausführungsbeispiel der Erfindung vorgesehen sein kann, dass das zweite Klemmteil eine auf der Außenseite der von den beiden Klemmteilen zwischen sich eingeschlossenen Gurtbandlage angeordnete Abdeckkappe ist, ist hiermit der Vorteil verbunden, dass der Verbindungsstift bei der Montage von der als zweites Klemmteil wirkenden Abdeckkappe vollständig aufgenommen und daher nicht sichtbar ist, so dass keine zusätzlichen Abdeckungen für den Verbindungsstift am Gurtknopf benötigt werden.

In der Zeichnung ist ein Ausführungsbeispiel der Erfindung wiedergegeben, welches nachstehend beschrieben ist. Es zeigen:
- Fig. 1: einen aufblasbaren Sicherheitsgurt mit daran verschiebbar angeordneter Gurtzunge und einem Gurtknopf,
- Fig. 2: den Gegenstand der Figur 1 in einer Schnittansicht,
- Fig. 3: eine Schnittdarstellung des an einer Gurtbandlage befestigten, aus zwei miteinander verbundenen Klemmteilen bestehenden Gurtknopfes.

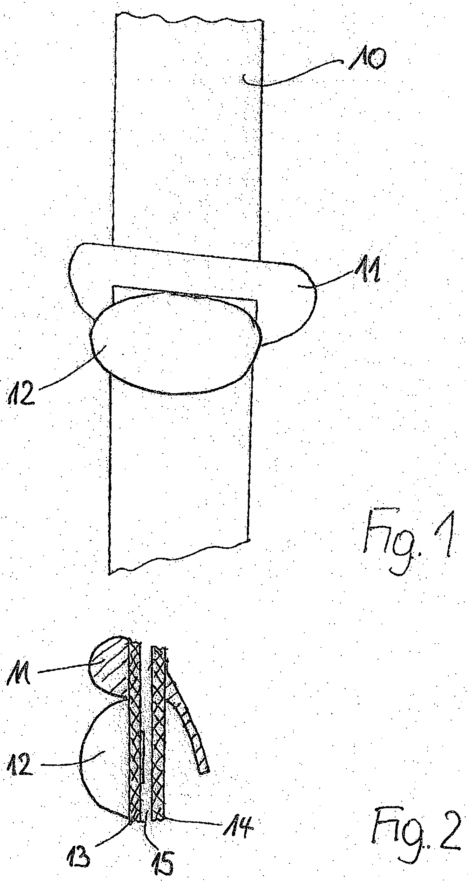

Figur 1 zeigt in einer schematischen Darstellung einen aufblasbaren Sicherheitsgurt 10 mit einer daran verschiebbar angeordneten Gurtzunge 11 und einem an dem Sicherheitsgurt 10 befestigten Gurtknopf 12, der das Herunterrutschen der Gurtzunge 11 längs des Sicherheitsgurtes 10 begrenzt, so dass sich die Gurtzunge 11 in der Ablegeposition des Sicherheitsgurtes 10 in einer griffgünstigen Stellung für den Fahrzeuginsassen befindet.

Aus Figur 2 ist der aufblasbare Sicherheitsgurt 10 mit Gurtknopf 12 und daran anliegender Gurtzunge 11 ersichtlich. Der aufblasbare Sicherheitsgurt ist dabei zweilagig mit einer ersten Gurtbandlage 13 und einer zweiten Gurtbandlage 14 ausgebildet, wodurch sich zwischen den Gurtbandlagen 13, 14 ein Hohlraum 15 ergibt, in den im Auslösefall ein von einem nicht dargestellten Gasgenerator erzeugter Gasstrom einleitbar ist. Der Gürtknopf 12 ist dabei nur mit der ersten Gurtbandlage 13 verbunden, so dass die Verbindung des Gurtknopfes 12 mit dem aufblasbaren Sicherheitsgurt 10 die zweite Gurtbandlage 14 bewusst nicht erfasst. Durch den in den Hohlraum 15 einleitbaren Gasstrom wird der aufblasbare Sicherheitsgurt 10 in eine Schlauchform mit einem entsprechend vergrößerten Hohlraum 15 aufgeblasen, wobei der Gurtknopf 12 von der nach außen weisenden Oberfläche der ersten Gurtbandlage 13 absteht, welche in der Ablegeposition des Sicherheitsgurtes 10 der Fahrzeugstruktur zugewandt ist, so dass der Gurtknopf 12 in dieser Position für den Fahrzeuginsassen nicht sichtbar ist. Soweit der Gurtknopf 12 an der ersten, im angelegten Zustand nicht an dem Insassen anliegenden Gurtbandlage 13 befestigt ist, ist der Gurtknopf 12 bei angelegtem Sicherheitsgurt 10 nicht zu sehen und stört darüber hinaus die Gleitbewegung des Sicherheitsgurtes 10 auf dem Körper des Fahrzeuginsassen nicht.

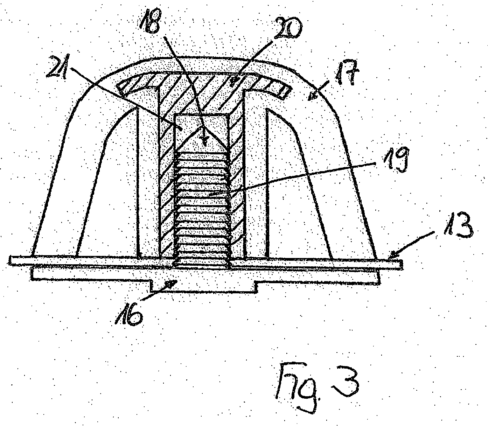

Wie im Einzelnen Figur 3 zu entnehmen ist, ist der Gurtknopf 12 von zwei die erste Gurtbandlage 13 zwischen sich einschließenden Klemmteilen 16 und 17 gebildet, wobei das zwischen den Gurtbandlagen 13, 14 gelegene erste Klemmteil 13 plattenförmig ausgebildet ist. Das auf der Außenseite der ersten Gurtbandlage 13 angeordnete zweite Klemmteil 17 bildet gleichzeitig eine entsprechend geformte Abdeckkappe aus.

Zur Verbindung von erstem Klemmteil 16 und zweitem Klemmteil 17 ist an dem ersten, plattenförmigen Klemmteil 16 ein Verbindungsstift 18 angebracht, der die erste Gurtbandlage 13 in einer entsprechend zugeordneten Durchbrechung durchstößt und in die auf der Außenseite der ersten Gurtbandlage 13 angeordnete Abdeckkappe als zweites Klemmteil 17 eingreift. Zur Verbindung der beiden Klemmteile 16 und 17 über den Verbindungsstift 18 ist einerseits der Verbindungsstift 18 auf seinem äußeren Umfang mit einem Sägezahnprofil 19 versehen und es weist andererseits das zweite Klemmteil 17 eine Ausnehmung 21 zur Aufnahme des Verbindungsstiftes 18 auf, wobei bei dem dargestellten Ausführungsbeispiel die Ausnehmung 21 im Inneren einer in das zweite Klemmteil 17 eingelegten, vorzugsweise in die Kunststoff-Abdeckkappe eingespritzten Hülse 20 ausgebildet ist. Soweit der Verbindungsstift 18 auf seinem Außenumfang mit einem Sägezahnprofil 19 versehen ist, stellt dieses Sägezahnprofil 19 zusammen mit einer definierten Presspassung des Verbindungsstiftes 18 in der einen etwas kleineren Durchmesser als der Außendurchmesser des Sägezahnprofils 19 aufweisenden Ausnehmung 21 eine formschlüssige Verbindung zwischen den beiden Klemmteilen 16, 17 her.

Soweit ein Verbindungsstift zur Herstellung der Verbindung der beiden Klemmteile 16, 17 grundsätzlich ausreichend ist, umfasst die Erfindung auch die Anordnung von mehreren Verbindungsstiften.

Jeder betreffende Verbindungsstift 18 kann dabei nach Ausführungsbeispielen der Erfindung fester Bestandteil des ersten Klemmteils 16, also beispielsweise ebenfalls in dieses eingespritzt sein, oder der Verbindungsstift 18 kann als zusätzliches Bauteil eingesetzt und in geeigneter Weise mit dem ersten Klemmteil 16 verbunden werden.

Entsprechendes gilt auch für die in dem zweiten Klemmteil 17 angeordnete Hülse 20, die aber ebenfalls keinen notwendigen Bestandteil der erfindungsgemäßen Ausgestaltung bildet, da der Verbindungsstift auch in eine unmittelbar in dem zweiten Klemmteil 17 ausgebildete Ausnehmung 21 eingreifen kann.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihrer verschiedenen Ausführungsformen wesentlich sein.

## Patentansprüche

1. Aufblasbarer Sicherheitsgurt (10) mit zwei übereinander angeordneten Gurtbandlagen (13, 14) und einer bei Aktivierung einen zwischen die Gurtbandlagen einleitbaren Gasstrom erzeugenden Druckgasquelle und mit einem an einer der Gurtbandlagen (13) festgelegten Gurtknopf (12), wobei der Gurtknopf (12) wenigstens zweiteilig mit jeweils einem an unterschiedlichen Seiten der Gurtbandlage (13) angeordneten und die Gurtbandlage (13) einklemmenden ersten (16) und zweiten (17) Klemmteil ausgebildet ist und an dem zwischen den Gurtbandlagen (13, 14) angeordneten ersten Klemmteil (16) wenigstens ein die Gurtbandlage (13) durchstoßender Verbindungsstift (18) festgelegt ist, **dadurch gekennzeichnet, dass** der Verbindungsstift (18) aus Metall besteht und mit einem an seinem äußeren Umfang ausgebildeten Sägezahnprofil (19) in eine an dem zweiten Klemmteil (17) ausgebildete, einen kleineren Durchmesser als der Außendurchmesser des Sägezahnprofils (19) aufweisende Ausnehmung (21) eingreift und darin festgelegt ist.

2. Aufblasbarer Sicherheitsgurt nach Anspruch 1, **dadurch gekennzeichnet, dass** der Verbindungsstift (18) fester Bestandteil des ersten Klemmteils (16) ist.

3. Aufblasbarer Sicherheitsgurt nach Anspruch 1, **dadurch gekennzeichnet, dass** der Verbindungsstift (18) an dem ersten Klemmteil (16) befestigt ist.

4. Aufblasbarer Sicherheitsgurt nach einem der Ansprüche 1 bis 3, **dadurch gekennzeichnet, dass** die in dem zweiten Klemmteil (17) ausgebildete Ausnehmung (21) zur Aufnahme des Verbindungsstiftes (18) von einer in dem zweiten Klemmteil (17) festgelegten Hülse (20) gebildet ist.

5. Aufblasbarer Sicherheitsgurt nach Anspruch 4, **dadurch gekennzeichnet, dass** die Hülse (20) fester Bestandteil des zweiten Klemmteils (17) ist.

6. Aufblasbarer Sicherheitsgurt nach Anspruch 4, **dadurch gekennzeichnet, dass** die Hülse (20) an dem zweiten Klemmteil (17) befestigt ist.

7. Aufblasbarer Sicherheitsgurt nach einem der Ansprüche 4 bis 6, **dadurch gekennzeichnet, dass** die Hülse (20) aus Metall besteht.

8. Aufblasbarer Sicherheitsgurt nach einem der Ansprüche 1 bis 7, **dadurch gekennzeichnet, dass** das zweite Klemmteil (17) eine auf der Außenseite der von den beiden Klemmteilen (16, 17) zwischen sich eingeschlossenen Gurtbandlage (13) angeordnete Abdeckkäppe ist.

## Claims

1. Inflatable safety belt (10) with two superposed belt band layers (13,14) and a compressed gas source which produces a gas flow which can be introduced between the belt band layers upon activation and with a belt button (12) fastened to one of the belt band layers (13), wherein the belt button (12) is constructed at least in two parts, with a first (16) and second (17) clamping part which are arranged on different sides of the belt band layer (13) and clamp the belt band layer (13), and at least one connection pin (18) extending through the belt band layer (13) is fastened on the first clamping part (16) arranged between the belt band layers (13, 14), **characterized by that** the connection pin (18) consists of metal and engages with a sawtooth profile (19) formed on its outer circumference into a recess (21) formed on the second clamping part (17) and with a smaller diameter than the outside diameter of the sawtooth profile (19) and is fastened in this recess.

2. Inflatable safety belt according to Claim 1, **characterized by that** the connection pin (18) is a fixed component of the first clamping part (16).

3. Inflatable safety belt according to Claim 1, **characterized by that** the connection pin (18) is fastened to the first clamping part (16).

4. Inflatable safety belt according to one of Claims 1 to 3, **characterized by that** the recess (21) formed in the second clamping part (17) is constructed for receiving the connection pin (18) from a casing (20) fastened in the second clamping part (17).

5. Inflatable safety belt according to Claim 4, **characterized by that** the casing (20) is a fixed component of the second clamping part (17).

6. Inflatable safety belt according to Claim 4, **characterized by that** the casing (20) is fastened to the second clamping part (17).

7. Inflatable safety belt according to one of Claims 4 to 6, **characterized by that** the casing (20) consists of metal.

8. Inflatable safety belt according to one of Claims 1 to 7, **characterized by that** the second clamping part (17) is a cover cap arranged on the outside of the belt band layer (13) enclosed between the two clamping parts (16,17).

## Revendications

1. Ceinture de sécurité gonflable (10) comprenant deux couches de sangle de ceinture (13, 14) disposées l'une au-dessus de l'autre et une source de gaz sous pression générant lors de l'activation un flux de gaz pouvant être introduit entre les couches de sangle de ceinture, et comprenant un bouton de ceinture (12) maintenu sur une des couches de sangle de ceinture (13), le bouton de ceinture (12) étant réalisé au moins en deux parties avec respectivement une première (16) et une seconde (17) pièce de serrage disposées sur des côtés différents de la couche de sangle de ceinture (13) et serrant la couche de sangle de ceinture (13), et au moins une tige de liaison (18) traversant la couche de sangle de ceinture (13) étant maintenue sur la première pièce de serrage (16) disposée entre les couches de sangle de ceinture (13, 14), **caractérisée en ce que** la tige de liaison (18) est constituée de métal et vient en prise avec un profil en dents de scie (19) réalisé sur sa périphérie extérieure dans un évidement (21) réalisé sur la seconde pièce de serrage (17), présentant un diamètre inférieur au diamètre extérieur du profil en dent de scie (19), et est maintenue dans celui-ci.

2. Ceinture de sécurité gonflable selon la revendication 1, **caractérisée en ce que** la tige de liaison (18) fait partie intégrante de la première pièce de serrage (16).

3. Ceinture de sécurité gonflable selon la revendication 1, **caractérisée en ce que** la tige de liaison (18) est fixée sur la première pièce de serrage (16).

4. Ceinture de sécurité gonflable selon l'une des revendications 1 à 3, **caractérisée en ce que** l'évidement (21) réalisé dans la seconde pièce de serrage (17) est formé pour la réception de la tige de liaison (18) par un manchon (20) maintenu dans la seconde pièce de serrage (17).

5. Ceinture de sécurité gonflable selon la revendication 4, **caractérisée en ce que** le manchon (20) fait partie intégrante de la seconde pièce de serrage (17).

6. Ceinture de sécurité gonflable selon la revendication 4, **caractérisée en ce que** le manchon (20) est fixé sur la seconde pièce de serrage (17).

7. Ceinture de sécurité gonflable selon l'une des revendications 4 à 6, **caractérisée en ce que** le manchon (20) est constitué de métal.

8. Ceinture de sécurité gonflable selon l'une des revendications 1 à 7, **caractérisée en ce que** la seconde pièce de serrage (17) est un capuchon disposé sur le côté extérieur de la couche de sangle de ceinture (13) enfermée par les deux pièces de serrage (16, 17) entre elles.
